# EUROPEAN PATENT SPECIFICATION

(11) **EP 2 702 217 B1**
(45) Date of publication and mention of the grant of the patent: **26.08.2015**
(21) Application number: 12711844.6
(22) Date of filing: 26.03.2012
(51) Int. Cl.: E04H 12/04, F03D 11/04, E04H 12/18, E04H 12/34

(54) **A WIND TURBINE TOWER MADE OF WOOD AND A METHOD OF ERECTION THEREOF**
WINDTURBINENTURM AUS HOLZ UND VERFAHREN ZU SEINER ERRICHTUNG
ÉOLIENNE CONSTRUITE EN BOIS ET SON PROCÉDÉ DE MONTAGE

(30) Priority: 28.04.2011 GB 201107205
(43) Date of publication of application: 05.03.2014
(73) Proprietor: Innoventum AB, 211 15 Malmö (SE)
(72) Inventor: HARRYSON, Sigvald, S-211 14 Malmö (SE); MATTSSON, Johan, S-232 51 Åkarp (SE); HASSELQVIST, Fredrik, S-211 15 Malmö (SE); TÖRNQVIST, Fredrik, S-211 15 Malmö (SE)
(74) Representative: Larsson, Malin
(86) International application number: PCT/EP2012/055288
(87) International publication number: WO 2012/146447

(56) References cited:
- WO-A1-2008/153489
- WO-A1-2010/134863
- WO-A2-2008/095667
- CA-A1- 2 342 375
- DE-U1- 9 406 226
- DE-U1- 20 019 618
- DE-U1-202008 010 515
- JP-A- 9 042 144
- NL-A- 7 207 757
- US-A- 2 003 738
- US-A- 2 409 060
- US-A- 3 491 502

## Description

### Field of invention

The present invention relates to a wind turbine tower made of modularised wood, a method for erection of such wind turbine tower and a modularised assembly kit

### Background of the invention

As a source of energy, wind offers a multitude of benefits. Since it is indigenous to Europe, it reduces the dependence on the import of energy from third countries. Wind is economically sound, because there are no changeable fuel costs to pay. Wind is clean - wind turbines emit no harmful gases or other substances. Moreover, wind power generation belongs to the technologies with comparatively low operation costs, which makes the usage of more expensive and polluting technologies (such as gas turbines and condensing plants) less cost-efficient in the long run.

Wind power exists in two major variations: large-scale industrial power plants and small-scale micro-generation facilities. While the former achieved significant progress in cost-efficiency, the latter technologies are far from being optimized cost-wise. One dimension for further optimization is the improvement of tower solutions available in the market of small wind. Current standard is a steel tower with either hollow tubular (stand-alone or guy wired) or lattice design. There is a number of commonly known technical disadvantages of such towers: 1) steel structures, especially hollow tubular designs, are known for amplifying the noise and vibration coming from the generator, 2) steel towers are known for corrosion problems, especially in humid climates and in installations with close proximity to the sea - which altogether diminishes the benefits of small wind energy in residential as well as in commercial applications. Moreover, steel prices in the world market are increasing at a record pace, which makes the production of steel towers more and more costly. Furthermore, wood is a renewable material while steel is not, which makes wood a sound choice from the point of view of sustainability and long-term economic perspective.

According to WO2008153489 and WO2010134863, a tower made of wood can attain a much higher carrying capacity at the same cost as a steel tower. Alternatively, the same carrying capacity is achieved at lower cost in comparison with a conventional steel tower. However, the solutions from the above mentioned publications relate to larger wind turbines used in industrial energy production. The mentioned towers do not provide solutions for easy assembly and erection of the tower, since the assembly is done at a factory and tower erection is done with help of heavy equipment such as crane. Thus, these towers are less suitable in small-scale wind power systems were it is important to provide an easy-to-assemble and easy-to-erect solution.

CA2342375 describes a tower made of two wooden support poles secured to the ground and raising up a wooden main mast with a counter weight attached at its base. The main mast is hinged to the upper portion of the two support poles allowing the main mast to be folded down to the ground level to allow for maintenance and storage. By the poles, there are strict limitations to as how tall a wind turbine tower can be. It depends heavily on the natural size of poles. The same problem relates to the JP9042144 describing the use of a used existing utility pole as a pillar for a windmill by using the scrap wood of this utility pole as a windmill supporting pillar, attaching a windmill body tight to an upper end part of the windmill supporting pillar, and forming a footstall in a lower end of this windmill supporting pillar. The tower made of the scrap utility pole would be limited by the natural size of such a pole while its installation would require heavy equipment.

Another parameter that has room for improvement in small wind energy application is the usage of environmentally friendly solutions. Production of a steel tower requires a lot of energy and is associated with sizeable emissions of carbon dioxide. For example, the sole production of steel for one stand-alone 12 meter tower, on average, causes the emission of 4 tons of CO₂ plus the use of 400 litres of oil while wood material for such a tower is provided by two trees that have absorbed at least one ton of CO₂ while growing. The disposal of the steel tower does not recover enough energy to even out the energy balance nor does it compensate for CO₂ emissions.

WO2008095667, WO2008153489, WO2010134863 and DE202008010515 propose the use of laminated wood for wind towers, the towers having a hollow, tubular design. Lamination with various types of adhesives and surface covering using polymers, sometimes fibre reinforced, makes the wood dangerous to incinerate, since such adhesives/polymers emit harmful substances, therefore, decreasing environmental value of the solution. In the same way, extensive use of composite materials and adhesives such as in WO2008095667 diminishes the environmental friendliness of the wood construction.

Additionally, the factor that is often disregarded is the functionality of the wind turbine tower compared to other supportive structures made of wood, e.g., utility poles, antenna- and cable-bearing masts, line risers and the like.

Supportive wooden structures that are intended for other applications such as utility- and telecom-related masts described in DE20019618U1, DE9406226 U1, NL7207757A, US2409060A and US3491502A cannot be used in the unchanged form as a supportive tower for a wind turbine, since the loads and forces affecting the structure are significantly higher in case of wind turbine tower application. By way of example, the blades must be allowed to run freely and most importantly a completely different method for tower erection is required. It is therefore unlikely that a skilled man would not distinguish the functionality of the two types of structures.

Similarly, the invention in US2003738A describing the fabricated structures does not have any indication of its possible use as a wind turbine tower.

Following the known towers discussed above, there is a need for a tower solution suitable for small-scale wind power systems being easy-to-assemble and easy-to-erect. Further, such solution should provide an environmentally friendly design and have a low production, transportation and handling cost.

### Summary of the invention

In order to achieve the above-specified and further unspecified objectives, which will emerge from the following description, the present invention relates to a wind turbine tower made of modularised wood, characterized in that the tower is a three legged structure, each leg comprising a single wooded and double wooded modularized column, whereby one of said three legs is tiltable in order to allow erection of said tower.

The wooden tower solution according to the invention allows a number of advantages. The modularization by the legs being constituted by a number of combinable columns, allows for easy transportation with simple equipment. In fact a normal car with a normal trailer can be used. This is of particular value for locations where use of heavy transport is inconvenient or undesirable, e.g., fields and gardens. By the modularization the volume of a disassembled tower can be as low as 1.5m³. In one example, the length of the individual modules can be lower than 2.4 meters.

By the three-legged structure with one tiltable leg, the main load can be transferred from the point of interconnection of the three tower legs, which is not supported from below, to the point lying in the same plane as the two symmetrical legs. This allows for better stability and robustness of the structure.

The tiltable leg ensures a slimmer top of the tower, which allows for a larger rotor of the wind turbine to spin undisturbed by the tower structure, as compared to a classic tripod design. Further, the rotor can be arranged closer to the centre of the tower, reducing the forces applied to the tower by the rotor. Further, noise reduction is made possible.

All modules can be made from standardized wooden planks being processed in a small workshop, e.g. a study workshop. This allows the manufacturing costs to be kept at a minimum. The wood used can be impregnated to ensure durability and cost-efficiency of the solution.

By a single wooded column is meant a wooden plank of certain dimensions, such as a longitudinal plank with a rectangular cross section. It is though to be understood that other cross sections are possible. By way of example only, for a 12 meter tower such plank could be 2000x195x70mm.

By a double wooded column is meant a combination of two mutually parallel wooden planks connected with a spacer plank between them. The spacer plank may be positioned at one end of the two parallel wooden planks with one projecting end and may, by the projecting end connect a first double wooded column with a second double wooded column. The spacer plank may be arranged in such manner that the length of the portion being arranged between the wooden planks of the first double wooded column corresponds to the length of the portion being arranged between the wooden planks of the second double wooded column. Accordingly, one and the same spacer plank may be used for two double wooded columns. By way of example only, for a 12 meter tower the parallel wooden planks constituting a double wooded column can be 2000x195x70mm and the spacer plank can be 680x195x70mm. The majority of modules used for the construction of the tower may be represented by single and double wooded columns.

Each leg may be constructed from the following sections: a top section constituted by a single wooded column, a middle section constituted by two double wooded columns and a lower section constituted by at least two double wooded columns. By the legs being divided into sections, the size of the tower in its non-erected and disassembled condition may be strictly reduced, allowing a very easy handling of the parts.

The at least two double wooded columns constituting the lower section may have the same dimensions as the two double wooded columns constituting said middle section. By using one and the same design to a number of constituents of the tower, the manufacturing costs may be greatly reduced. Also, the operation during erecting is facilitated.

All modules may be made from standardized wooden planks. The overall cost may thereby be greatly reduced.

Two of the legs may be symmetrical and form an angle of 12° between them, while the third leg is inclined at 6°, 12° and 18° in its upper, middle and lower sections respectively in view of the two symmetrical legs. All the angles specified have an aliquot part of 6°. This aliquot part can be reduced or increased by some degrees with the effect of slimming or flattening the three-legged structure while reducing or increasing its stability, respectively. By way of example, two of the legs may be symmetrical and form an angle of 11-13° between them, while the third leg is inclined at 5-7°, 11-13° and 17-19° in its upper, middle and lower sections respectively in view of the two symmetrical legs. All the angles specified have an aliquot part of 5-7°.As a general rule, the lighter the wind turbine the slimmer the tower can be. The exact measurements and angles can be decided on by a skilled man depending on the weight of the wind turbine and the size of the installation site available.

The wood used may be impregnated. It is advised to use impregnated wood, especially in areas with harsh climate. Impregnation allows for minimal maintenance and increased cost-efficiency of the solution. Modern types of impregnation including natural oils, such as linseed oil, provide environmentally-friendly protection. Alternatively, glass fortified wood may be used.

The tower can further comprise a top column, said top column being connected to the top sections of said three legs for the connection of a wind turbine. The top column can be made of wood or a metal material. The top column preferably has a round or a rounded cross section to allow a noise reduction and also benefit from aerodynamic advantages resulting there from.

At least some of the upper and lower edge portions of said single and/or double wooded columns may be provided with a chamfering. By using a chamfering, precipitation such as rain and snow will easily come off the structure since the capillary action is rendered more difficult. The chamfering should be made with an angle facing away from the tower structure in such a manner that no pockets collecting dirt or precipitation are formed.

The tiltable leg is arranged to be lockable in a tilted position. The tilting allows an easy erection since that leg during erection gradually may be re-formed while raising the other two straight legs. By designing the leg to be lockable in a tilted position, the blades of the wind turbine may be arranged closer to the main vertical axis of the tower, whereby the tower as such will be exposed to lower forces during use. The tilted leg will additionally reduce the risk of interference between the tilted leg and the blades during use and especially during strong wind when the deflection of the blades can be extensive.

The single wooded and double wooded modularized columns may be mutually joined by bolts and/or adhesives. Trials have shown that the use of adhesive, either solely or in combination with bolts, will result in a more rigid tower than a tower solely using bolts. Further, deflection during erection has proven to decrease substantially.

According to another aspect, the invention rotates to a method for erection of a wind turbine tower, said tower comprising a three-legged structure, one of said three legs being tiltable, comprising the steps of: providing one foundation for each leg; arranging said three legs on the ground; connecting the two non-tiltable legs to their respective foundations; and erecting said tower by elevating the free ends of the two non-tiltable legs and attaching the upper section of the tiltable leg to the top section of said two elevated non-tiltable legs by pushing said tiltable leg towards its foundation and connecting it to said foundation.

The whole erection process can be performed by two to four persons, whereby no crane or other heavy equipment is needed.

The inventive tower erection process requires fewer man-hours and equipment to complete than is seen in the prior art. Further, the tilted leg allows for better stability of the construction during the erection process. When all three legs are half-length on the ground and the top connection section is being mounted, the tilted leg has larger bearing area than the two symmetrical legs, therefore ensuring stability of the structure and allowing for higher load to be put on the tilted leg.

It has also been shown that if the wooden elements are joined by a combination of bolts and adhesives or even adhesives only where possible, the rigidity of the tower increases substantially than if only bolts are used.

The type of foundation depends on parameters such as the size of the tower, the type of ground and the soil conditions. By way of example, the foundation may be formed by three concrete blocks, one for each leg. The connection to the foundation is in its easiest form made by bolts. The foundation intended for the two non-tiltable legs can be provided with a higher strength than the foundation intended for the tiltable leg in order to sustain pull forces. In case of a concrete foundation, it is to be understood that it can be provided with reinforcement.

The method may comprise the mounting of a wind turbine to the top section of the tower before it is being fully erected, when all three legs are at least half-length above the ground, and thereafter the mentioned wind turbine may be elevated together with the wind turbine tower as this is being erected to a fully erected state. This allows for the mounting of the turbine from the ground as opposed to mounting it at the top of the tower once the tower is fully erected, thereby limiting the use of any heavy equipment, e.g. a skylift.

The wind turbine may be mounted to a top column, said top column being connected to the top sections of said three legs for the connection of said wind turbine.

By mounting the wind turbine to a top column, the wind turbine and also its blades are elevated from ground where the energy efficiency is higher. Further, the risk of the blades of the turbine interfering with the three-legged tower is reduced.

According to yet another aspect, the invention relates to a modularised assembly kit comprising a wind turbine tower having the features as previously described, additionally comprising a wind turbine.

### Brief Description of the Figures

The invention will be described in greater detail below for illustrative purposes with reference to the accompanying drawings, which show currently preferred embodiments.
Figures 1 and 1 a disclose a view of the wooden tower according to one embodiment of the invention.
Figure 2 is a front view of the tower according to the embodiment of Figure 1.
Figure 3 is a side view of the tower according to the embodiment of Figure 1.
Figure 4a and 4b disclose an example of chamfering.
Figure 5 is a view of the wooden tower according to a second embodiment of the invention.
Figure 6 discloses the first stage of the tower erection when all three legs of the tower are on the ground.
Figure 7 discloses the intermediate stage of the tower erection.

### Description of Embodiment Examples

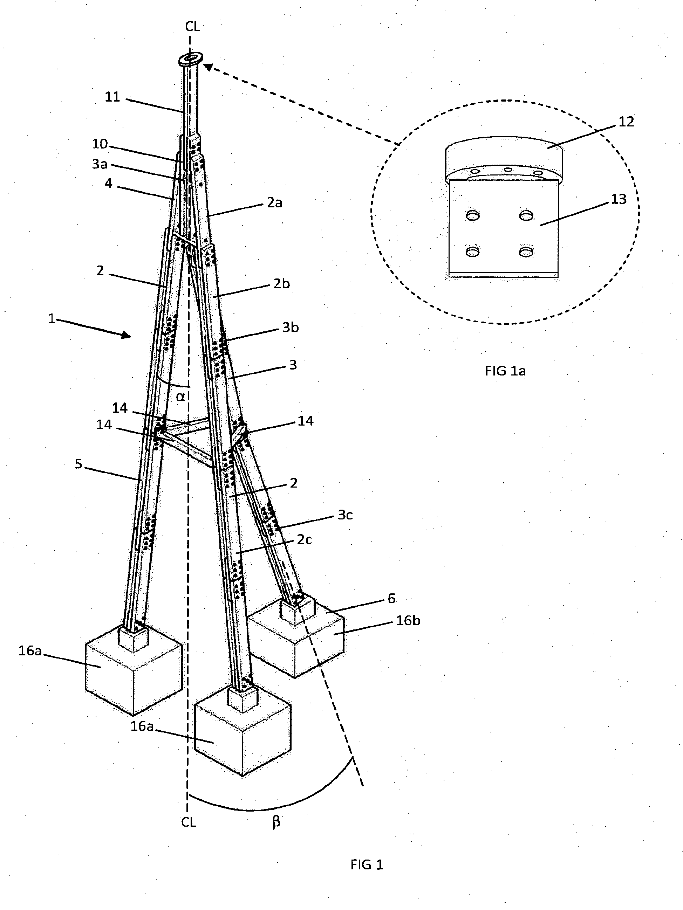

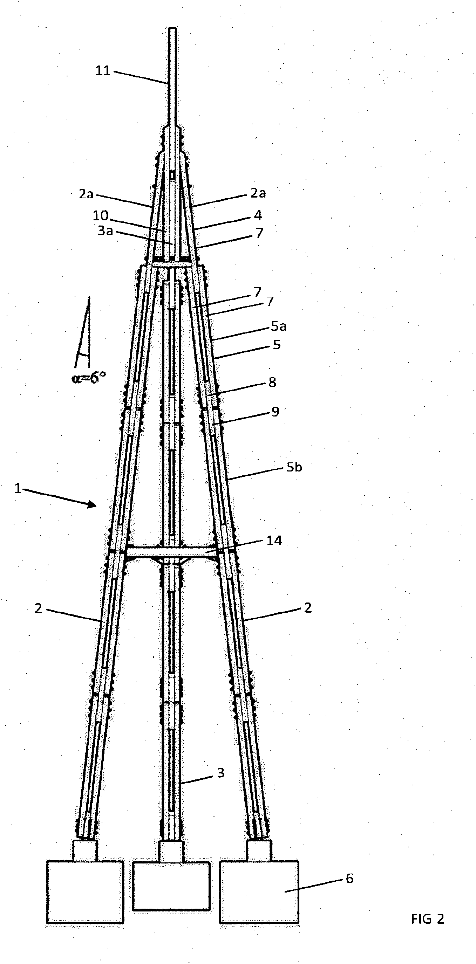

Referring to Figure 1 and Figure 2, a view of the wind turbine tower 1 according to one embodiment of the invention is illustrated. The wind turbine tower 1 is disclosed without a wind turbine. The wind turbine tower 1 represents a three-leg structure, wherein each leg 2, 3 is made of three wooden sections, an upper section 2a, 3a, a middle section 2b, 3b and a lower section 2c, 3c.

Two of the legs 2 are symmetrical and form together an inverted V-shape, which when the tower is erected is essentially vertically arranged. The symmetrical legs 2 and their middle sections 2b form an angle α of 6° from each side of a vertical centreline CL to thereby form said inverted V-shape.

The third leg 3 is, as is best seen in Figure 1, tilted in view of the vertical centre line CL. In the disclosed embodiment, the upper section 3a is tilted an angle β of 6° in view of the vertical centreline CL. The middle section 3b is tilted an angle β of 12° and the lower section 3c is tilted an angle β of 18° in view of the vertical centreline CL. It is to be understood that other angles than those mentioned might be possible.

The legs 2, 3 are constructed from the following sections - a top section 2a, 3a constituted by a single-wooded column 4, a middle section 2b, 3b constituted by two double wooded columns 5, and a lower section 2c, 3c constituted by at least two double wooded columns 5. In the disclosed embodiment, the lower sections 2c, 3c consist of two double wooded columns 5. The dimensions of the two double wooded columns 5 of the lower sections 2c, 3c can have the same dimensions as the middle sections 2b, 3b. The lower most double wooded column of each leg is designed to be attached to a foundation 6.

Now referring to Figure 2, by a single wooded column 4 is meant a wooden plank 7 of certain dimensions, such as a plank having longitudinal extension with a rectangular cross section. It is to be understood that other cross sections are possible. By way of example only, for a 12-meter tower 1 such wooden plank could be 2000x195x70mm.

By a double wooded column 5 is meant a combination of two mutually parallel wooden planks 7 connected with a spacer plank 8 between them. The spacer plank 8 may be positioned at one end of the two parallel wooden planks 7 with one projecting end 9 and may, by the projecting end 9 connect a first double wooded column 5a with a second double wooded column 5b. The spacer plank 8 may be arranged in such manner that the length of the portion being arranged between the wooden planks of the first double wooded column 5a corresponds to the length of the portion being arranged between the wooden planks of the second double wooded column 5b. Accordingly, one and the same spacer plank 8 may be used for two adjacent double wooded columns 5a, 5b.

By way of example only, for a 12 meters high tower 1, the plank of a single wooded column 4 could be 2000x195x70mm. Further, by way of example for a 12-meter high tower 1, the parallel wooden planks 7 constituting a double wooded column 5 could be 2000x195x70mm and the spacer plank 8 could be 680x195x70mm. It is to be understood that other dimensions than those mentioned might be possible.

As best seen in Figure 2, the top sections 2a of the two symmetrical legs 2 constituted by two single wooded columns 4 are integrated in an A-shaped module 10 at the top of the tower 1. The A-shaped module 10 is designed to be attached to the top column 11 with a turbine (not shown) fastened at the top thereof. In the same manner, the top single wooded column 3a of the tilted, third leg 3 is connected to the A-shaped module 10.

The aforementioned A-shaped module 10 at the top of the tower may be formed of two T-shaped columns and a T-shaped bar connected to the three single wooded columns of the three legs. The connections can be made with help of threaded rods or bolts and adhesives. The tower 1 may further comprise a top column 11, said top column being connected to the A-shaped module 10, thereby uniting the top sections 2a, 3a of said three legs 2, 3 for the connection of a wind turbine (not shown). The top column may be made of wood or metal. The top column 11 preferably has a round or a rounded cross section to allow for noise reduction and also benefit from aerodynamic advantages resulting there from.

The wind turbine may be fastened onto the top column 11 by using a round steel plate 12 welded either to the top column directly, in case the latter is made of metal, or to two perpendicular plates 13, see Figure 1 a. For illustrational purposes, Figure 1a only discloses one plate 13. As shown in Figure 1a, the round plate 12 comprises screw holes for fastening of the wind turbine, while both perpendicular plates 13 are intended to be bolted on each side of the two planks in the top column 11.

The first embodiment disclosed in Figures 1 and 2 comprises three triangle bars 14 positioned in the shape of a triangle connecting the three legs 2, 3 at the point of connection between the middle sections 2b, 3b and lower sections 2c, 3c of the tower legs 2, 3. The triangle bars 14 may be connected to the legs 2, 3 with help of metal plates, not shown, preferably with the design that is available ready-made. The triangle bars 14 may be put in place after the complete tower erection.

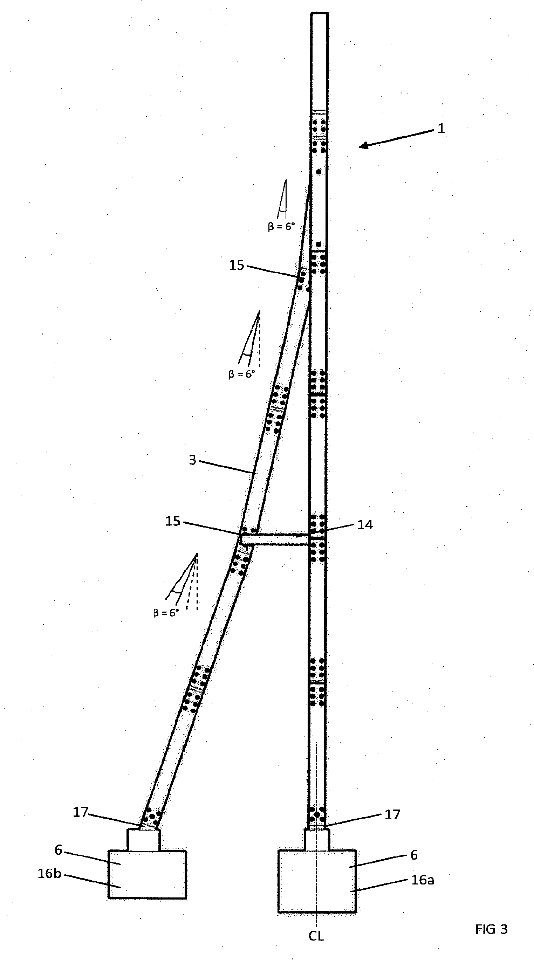

In the Figure 3 one can see a side view of the tower 1 according to the first embodiment where the tiltable leg 3 is seen in detail. In one embodiment, the tiltable leg 3 is inclined an angle β at 6°, 12° and 18° from the vertical centreline CL while the symmetrical legs have (as seen in figure 1) an angle α of 12° between them and 6° in view of the longitudinal centreline CL. Thus the aliquot part for all angles is 6. It is to be understood that this proportion can be changed by a few degrees up/down with the effect of flattening/slimming the tower. In general, the slimmer the tower, the smaller the wind turbine can be that is positioned on top of it, whereas flattening the tower will provide better stability while limiting the possibility of the rotor blades of the wind turbine to pass by the tower freely. Therefore, the choice of a reasonable proportion related to all angles α, β of the tower 1 should be made by a skilled man with regards to parameters such as the weight of the wind turbine, its rotor size, the size and the geographical aspects of the intended installation site.

When the tiltable third leg 3 is assembled, connections 15 between the three tower sections 3a, 3b, 3c, i.e. the upper, the middle, and the lower sections, may be kept flexible and adjustable until they are raised during the tower erection process to reach their final position. Thus, once the tower has been fully erected, the connections 15 are locked and made stiff by tightening the connection means. The connection means can be bolts or any other similar adjustable connecting means. Then, the triangle bars 14 are added.

The wood used for all wooden elements is preferably a high quality timber, such as Swedish timber having the strength class C24. It is preferred that the wood material is impregnated. Modern types of impregnation including natural oils, such as linseed oil, provide environmentally friendly protection. Alternatively, glass fortified wood may be used.

In some cases, other types of wood may be used, especially the ones with high natural durability, such as Douglas fir or larch, particularly in cases when impregnation is impossible, difficult or not desired.

Generally, the choice of suitable wooden material is made by a skilled man depending on the wood supply available, financial resources and design considerations for each project.

The columns 4, 5 may be joined with a combination of bolts, screws, adhesives and metal plates. For durability reasons, strength class of the steel elements should preferably not be less than C235 and bolts should preferably be hot-dip galvanized and have strength grade no less than 8.8. Due to forces acting on the connections while erecting the tower, additional steel plates between the wooden elements may be used as well as reinforcement screws.

The bolts may be combined with washers in the joints to keep wooden planks 7 and spacer planks 8 separated with a small distance and thereby allow water to be drained away.

Adhesives may be used for higher stiffness of the construction, especially when the weight of the wind turbine to be mounted is above 65kg. If it is expected that the tower 1 is going to be taken down often for maintenance or other reasons, e.g. at a testing site, it is advised to apply adhesives only in the construction of the two symmetrical legs 2 and not for the tiltable leg 3.

The design of connecting means in general, such as the metal plates, the positioning and quantity of bolts may vary and is to be determined by a skilled man, while one example can be seen in the above described figures.

As seen in Figures 1 and 2, and given above, the lowermost double wooded column 2c, 3c of each leg 2, 3 is designed to be attached to a foundation 6. The disclosed foundation 6 is made of three separate concrete blocks 16a, 16b. Each leg 2, 3 is adapted to be connected to a separate concrete block 16a, 16b. The two symmetrical legs 2 may preferably be adapted to be connected to identical concrete blocks 16a, as shown in Figures 1 and 2, whereas the concrete block 16b adapted for the tilted leg 3 may be somewhat smaller. In use, the two symmetrical legs 2 are subjected to a pulling force, generally requiring the ability to withstand higher forces. The legs 2, 3 may be connected to the concrete blocks 16a, 16b by being bolted to steel plates 17 fixed to the concrete blocks 16a, 16b. It is to be understood that the concrete blocks 16a, 16b may be provided with a suitable, not disclosed, reinforcement.

It is to be understood that other types of foundations may be used depending on the ground, the type of soil, expected load. For example, for a rocky site anchoring with steel rods screwed into the rock may be preferred. If the soil contains many stones or has high proportion of clay, anchoring with a wok-pan shaped foundations of metal may be preferred, employing the weight of the said stones and soil to keep the wok-pan shaped metallic anchors in place. If mounted on a rooftop or standing on a paved surface, i.e. with asphalt or tiles, the legs may be attached to pre-fabricated concrete blocks that are heavy enough to keep the tower in place.

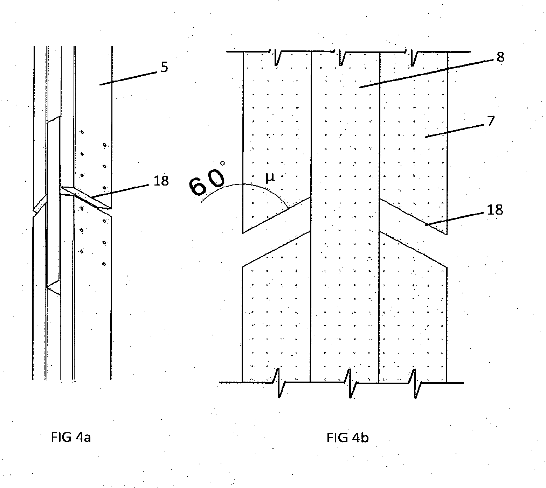

Now referring to Figures 4a-4b, one example of chamfering 18 is disclosed exemplified on a double wooded column 5. The same principle is applicable on a single wooded column. At least some of the upper and lower edge portions of the wooden planks 7 in a single and/or double wooded column 4, 5 may be provided with a chamfering 18. By using a chamfering 18, precipitation such as rain and snow will easily come off since the capillary action is rendered more difficult. The chamfering 18 should preferably be made with an angle µ facing away from the tower structure as such in such a manner that no pockets collecting dirt or precipitation are formed. In the illustrated example the angle µ is set to 60° providing a reclining edge portion, but it is to be understood that the angle µ can be set to another value, such as a value within the range 45°-65°. The exact angles µ are to be defined by a skilled man depending on the equipment and technical characteristics of the wood available as well as positioning of the wooden columns 4, 5 in that specific case. It is also to be understood that also the spacer plank 8, if any, can be provided with a chamfering 18, although not disclosed.

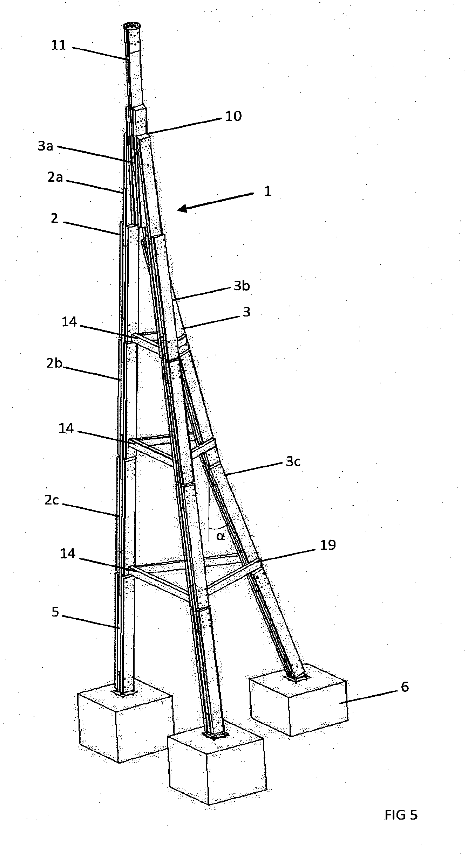

Figure 5 shows a view of a second embodiment of the tower 1. Apart from the elements used for the first embodiment, it includes six additional triangle bars 14 amounting to nine triangle bars overall as opposed to three triangle bars in the first embodiment. The triangle bars 14 are arranged to form three triangles. In the disclosed embodiment, the triangles are fixed at the points of connection between the lower sections 2c, 3c and the middle sections 2b, 3b of the legs 2, 3, in the centre of the middle sections 2b, 3b of the legs 2, 3 as well as in the centre of the bottom sections 2c, 3c. The angles α of the three sections 3a, 3b, 3c of the tilted leg 3 remain the same as in the first embodiment while the additional strength is secured by two additional sets of triangle bars 14. It is to be understood that other positions are possible.

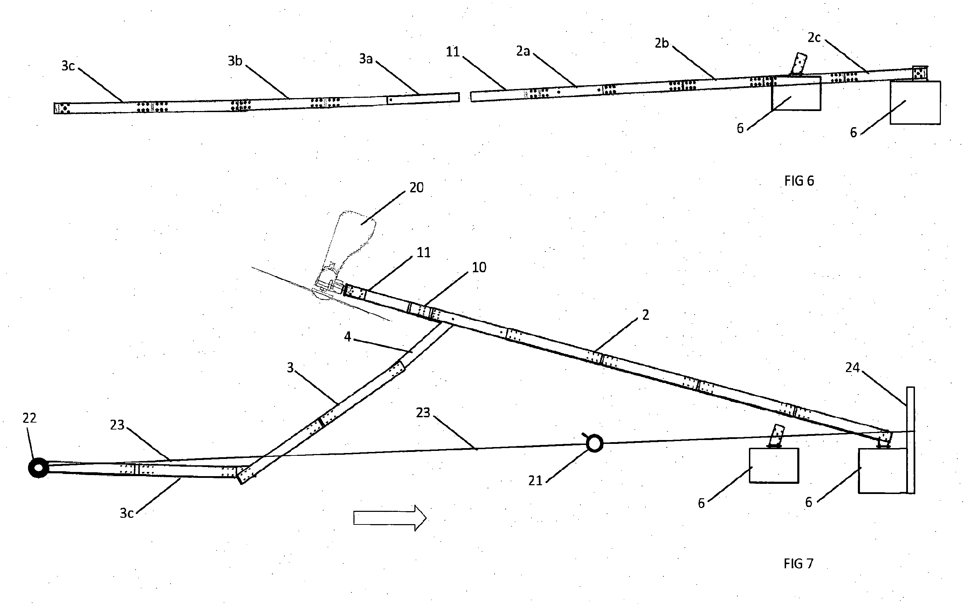

The second embodiment, similarly to the first embodiment may comprise a top column 11 and an A-shaped module 10. Further it may like the first embodiment comprise three legs 2, 3 made of a combination of single- and double-wooded columns 4, 5 with three double-wooded columns 5 designed to be fixed to the foundation 6, and three triangles 19 formed by nine triangle bars 14. Now referring to Figures 6 and 7, different stages of a tower erection applicable to the first or the second embodiments are disclosed. The method of erection can be described as follows. The lower sections 2c of the symmetrical legs 2 are attached to the foundation 6 and all other sections 2a, 2b, 3a, 3b, 3c of the legs 2, 3 are assembled on the ground. Each symmetrical leg 2 is attached to the A-shaped module 10. The wind turbine 20 is then connected to the top column 11. The tilted leg 3 is assembled on the ground close to the construction, see Figure 6. The two symmetrical legs 2 and the A-shaped module 10 with the top column 11 attached are elevated by means of a jack (not shown) or equivalent to reach a comfortable enough height to attach the top section of the tilted leg 3, i.e. its single-wooded column 4 to the A-shaped module 10, see Figure 7. As shown in Figure 7, wheels 22 may be put on each side of the lower section 3c of the tilted leg 3 and a rope 23 is tied just above the wheels 22. In order to erect the tower 1, a beam 24 may be put temporarily on the far/outer side between the symmetrical legs 2 and the rope 23 on the tilted leg 3 may be connected to a winch (e.g. grip hoist/tirfor hand winch). The winch 21 is then connected to the beam 24 between the symmetrical legs 2 and is pulled together. When the tilted leg 3 has reached its foundation 6 by being moved to the right in Figure 7 (see arrow), the wheels 22 may be detached and the leg 3 may be heaved onto the foundation 6. The tilted leg 3 may be secured to the foundation 6 with bolts. Finally, all three legs 2, 3 may be secured to the foundation 6 with additional bolts. One should make sure that the tower 1 is stable horizontally throughout the erection, for example, by controlling its unwanted movements due to wind by additional ropes attached to the top.

This erection procedure does not require any other equipment than ropes 23, a winch 21, a jack (not shown) and a pair of wheels 22. It can be completed by two to three people over 4-5 hours.

Although the tower 1 has been described as having a top section 2a, 3a of legs 2, 3 being made of single wooded columns 4, it is to be understood that other designs may be used, depending on expected loads. By way of example, double wooded columns 5 may be used or steel reinforcement may replace the wood in some cases. This is especially the case when deflection is required to be kept at minimum.

In the same way, if a higher tower 1 is required, the very same general design may be used. However, it is to be understood that the legs 2, 3 need to be modified. By way of example, this may be made by adding six double wooded columns 5 constituting a fourth and the lowest section of each leg. Two sets of triangle bars 14 may be added supporting the tower in the points of connection between such fourth and third sections of the legs 2, 3, and between the third and the second sections thereof. For the increased carrying capacity, more triangle bars 14 can be added, e.g. three additional sets of triangle bars 14 supporting the structure in the middle of the fourth, third and second sections of the tower legs. It is to be understood that heavier equipment such as a crane may be required for tower erection if the tower is scaled up or used for the turbines that are too heavy to be lifted manually.

Similarly, it is assumed that the tower of the proposed design may be scaled down by using fewer columns.

In general, it is assumed that the legs and their sections may be assembled in more than one way. The distances between the columns may be increased or decreased. It is also possible to stick the columns and the sections together by securing the connections with suitable adhesives. The thickness and length of the individual sections and columns may be increased or decreased depending on the intended use, material supply and design considerations. However, it is important to ensure that the parameters of the tower are suitable for the size, weight and technical characteristics of the wind turbine mounted on top of the said tower.

Tests and calculations have shown that the above illustrated towers may carry a wind turbine weighing up to 120 kg. Further, they may sustain wind speeds of up to 60m/s. The longevity of the solutions is above 20 years. Further, the weight of wood required for tower construction may be restricted to be below 700 kg. Further, by the modularization, the transportation volume can be restricted to 1.9m³.

It will be appreciated that the present invention is not limited to the disclosed embodiments. A number of modifications and variants are possible and the invention is consequently defined exclusively by the appended claims.

## Claims

1. A wind turbine tower made of modularized wood, being a three legged structure **characterized in that** each leg (2, 3) comprises a single wooded and double wooded modularized column (4, 5), whereby one of said three legs (3) is tiltable in order to allow erection of said tower (1),and wherein the wind turbine tower further comprises a top column (11), said top column (11) being connected to top sections (2a, 3a) of said three legs (2, 3) integrated in an A-shaped module (10) for the connection of a wind turbine (20).

2. The wind turbine tower according to claim 1, wherein each leg (2, 3) is constructed from the following sections: a top section (2a, 3a) constituted by a single wooded column (4), a middle section (2b, 3b) constituted by two double wooded columns (5) and a lower section (2c, 3c) constituted by at least two double wooded columns (5).

3. The wind turbine tower according to claim 2, wherein the at least two double wooded columns (5) constituting the lower section (2c, 3c) have the same dimensions as the two double wooded columns (5) constituting said middle section (2b, 3b).

4. A wind turbine tower according to claim 1, wherein all single wooded columns and double wooded columns (4, 5) are made from standardized wooden planks (7).

5. The wind turbine tower according to any of the preceding claims, wherein two of the legs (2) are symmetrical and form an angle (α) of 12° between them, while the third leg is inclined an angle (β) at 6°, 12° and 18° in its upper, middle and lower sections (3a, 3b, 3c) respectively in view of the two symmetrical legs (2).

6. The wind turbine tower according to any of the preceding claims, wherein the wood used is impregnated.

7. The wind turbine tower according to any of the preceding claims, wherein at least some of the upper and lower edge portions of said single and/or double wooded columns (4, 5) are provided with a chamfering (18).

8. The wind turbine tower according to any of the preceding claims, wherein said tiltable leg (3) is arranged to be lockable in a tilted position.

9. The wind turbine tower according to any of the preceding claims, wherein said single wooded and double wooded modularized columns (4, 5) can be mutually joined by bolts and/or adhesives.

10. A method for erection of the wind turbine tower according to any of claims 1-9, , comprising the steps of:
- providing one foundation (6) for each leg (2, 3);
- arranging said three legs (2, 3) on the ground;
- connecting the two non-tiltable legs (2) to their respective foundations (6),
- erecting said tower (1) by elevating the free ends of the two non-tiltable legs (2) and attaching the top section (3a) of the tiltable leg (3) to the top section (2a) of said two elevated non-tiltable legs (2) integrated in an A-shaped module (10) by pushing said tiltable leg (3) towards its foundation (6) and connecting it to said foundation (6).

11. The method for erection of the wind turbine tower according to claim 10, comprising the step of mounting a wind turbine (20) to the top column 11 of the tower (1) integrated in the A-shaped module (10) before it is being fully erected, when all three legs (2, 3) are at least half-length above the ground, and thereafter the mentioned wind turbine is elevated together with the wind turbine tower (1) as this is being erected to a fully erected state.

12. A modularised assembly kit comprising a wind turbine tower (1) according to any of claims 1-9 and a wind turbine (20).

## Patentansprüche

1. Windturbinenturm, der aus modularisiertem Holz hergestellt ist und der aus einer dreibeinigen Struktur besteht, **dadurch gekennzeichnet, dass** jedes Bein (2, 3) einen modularisierten Stützpfeiler (4, 5) aus einem einzelnen und doppelten Holzprofil umfasst, wobei eines der drei Beine (3) kippbar ist, um eine Errichtung des Turms (1) zu ermöglichen, und wobei der Windturbinenturm ferner einen oberen Stützpfeiler (11) an der Spitze umfasst, wobei der obere Stützpfeiler (11) mit oberen Abschnitten (2a, 3a) der drei Beine (2, 3), die in einem A-förmigen Modul (10) integriert sind, für die Verbindung einer Windturbine (20) verbunden wird.

2. Windturbinenturm nach Anspruch 1, wobei jedes Bein (2, 3) aus den folgenden Abschnitten aufgebaut wird: ein oberer Abschnitt (2a, 3a), der aus einem Stützpfeiler (4) eines einzelnen Holzprofils beschaffen ist, ein mittlerer Abschnitt (2b, 3b), der aus zwei Stützpfeilern (5) eines doppelten Holzprofils beschaffen ist, und ein unterer Abschnitt (2c, 3c), der aus mindestens zwei Stützpfeilern (5) eines doppelten Holzprofils beschaffen ist,

3. Windturbinenturm nach Anspruch 2, wobei die mindestens zwei Stützpfeiler (5) eines doppelten Holzprofils, die den unteren Abschnitt (2c, 3c) ausmachen, dieselben Dimensionen wie die zwei Stützpfeiler (5) eines doppelten Holzprofils aufweisen, die den mittleren Abschnitt (2b, 3b) ausmachen.

4. Windturbinenturm nach Anspruch 1, wobei alle Stützpfeiler aus einem einzelnen Holzprofil und alle Stützpfeiler (4, 5) aus einem doppelten Holzprofil aus standardiserten Holzplanken (7) hergestellt sind.

5. Windturbinenturm nach einem der vorhergehenden Ansprüche, wobei zwei der drei Beine (2) symmetrisch sind und einen Winkel (α) von 12° zwischen diesen bilden, während das dritte Bein um einen Winkel (β) von 6°, 12° bzw. 18° in dem oberen, mittleren bzw. unteren Abschnitt (3a, 3b, 3c) angesichts der symmetrischen Beine (2) geneigt ist.

6. Vorrichtung nach einem der vorhergehenden Ansprüche, wobei das verwendete Holz imprägniert ist.

7. Windturbinenturm nach einem der vorhergehenden Ansprüche, wobei mindestens einige der oberen und unteren Kantenabschnitte der Stützpfeiler (4, 5) aus einem einzelnen und/oder doppelten Holzprofil mit einer Kerbe (18) versehen sind.

8. Windturbinenturm nach einem der vorhergehenden Ansprüche, wobei das kippbare Beine (3) angeordnet ist, um in einer gekippten Position verriegelbar zu sein.

9. Windturbinenturm nach einem der vorhergehenden Ansprüche, wobei die modularisierten Stützpfeiler (4, 5) aus einem einzelnen und doppelten Holzprofil durch Bolzen und/oder Klebstoffe gegenseitig verbunden werden können.

10. Verfahren zur Errichtung des Windturbinenturms nach einem der Ansprüche 1 bis 9, das die folgenden Schritte umfasst:
- Bereitstellen eines Fundaments (6) für jedes Bein (2, 3);
- Anordnen der drei Beine (2, 3) auf dem Erdboden;
- Verbinden der zwei nicht kippbaren Beine (2) mit ihren jeweiligen Fundamenten (6),
- Errichten des Turms (1) durch Hochheben der freien Enden der zwei nicht kippbaren Beine (2) und Befestigen des oberen Abschnitts (3a) des kippbaren Beins (3) an dem oberen Abschnitt (2a) der zwei hochgezogenen, nicht kippbaren Beine (2), die in einem A-förmigen Modul (10) integriert sind, durch Stoßen des kippbaren Beins (3) zu seinem Fundament (6) und Verbinden des Beins mit dem Fundament (6).

11. Verfahren zur Errichtung des Windturbinenturms nach Anspruch 10, das, bevor der Turm vollständig errichtet wird, den Schritt des Befestigens einer Windturbine (20) an dem oberen Stützpfeiler (11) des Turms (1), der in dem A-förmigen Modul (10) integriert ist, umfasst, wobei das Befestigen einer Windturbine (20) erst dann erfolgt, wenn alle drei Beine (2, 3) mindestens eine halbe Länge über dem Erdboden sind, und erst danach wird die erwähnte Windturbine zusamme mit dem Windturbinenturm (1) hochgehoben, wenn dieser zu seinem vollständig aufgerichteten Zustand errichtet wird.

12. Bausatz für einen modularisierten Zusammenbau, wobei der Bausatz einen Windturbinenturm (1) nach einem der Ansprüche 1 bis 9 und eine Windturbine (20) umfasst.

## Revendications

1. Tour d'éolienne fabriquée en bois modularisé, étant une structure sur trépied, **caractérisée en ce que** chaque pied (2, 3) comprend une colonne en bois simple et en bois double (4, 5), sachant que l'un des trois pieds (3) peut basculer afin de permettre l'érection de la tour (1), et sachant que la tour d'éolienne comprend en outre une colonne supérieure (11), la colonne supérieure (11) étant reliée à des sections supérieures (2a, 3a) des trois pieds (2, 3) intégrés dans un module en forme de A (10) pour relier une éolienne (20).

2. Tour d'éolienne selon la revendication 1, dans laquelle chaque pied (2, 3) est construit à partir des sections suivantes : une section supérieure (2a, 3a) constituée d'une colonne en bois simple (4), une section centrale (2b, 3b) constituée de colonnes en bois double (5) et une section inférieure (2c, 3c) constituée d'au moins deux colonnes en bois double (5).

3. Tour d'éolienne selon la revendication 2, dans laquelle les aux moins deux colonnes en bois double (5) constituant la section inférieure (2c, 3c) ont les mêmes dimensions que les deux colonnes en bois double (5) constituant la section centrale (2b, 3b).

4. Tour d'éolienne selon la revendication 1, dans laquelle toutes les colonnes en bois simple et colonnes en bois double (4, 5) sont fabriquées avec des planches de bois standardisées (7).

5. Tour d'éolienne selon l'une quelconque des revendications précédentes, dans laquelle deux des pieds (2) sont symétriques et forment un angle (α) de 12° entre eux, tandis que le troisième pied est incliné d'un angle (β) à 6°, 12° et 18° dans ses sections supérieure, centrale et inférieure (3a, 3b, 3c) respectivement au vu des deux pieds symétriques (2).

6. Tour d'éolienne selon l'une quelconque des revendications précédentes, dans laquelle le bois utilisé est imprégné.

7. Tour d'éolienne selon l'une quelconque des revendications précédentes, dans laquelle au moins certaines des parties de bordure supérieure et inférieure des colonnes en bois simple et/ou double (4, 5) sont dotées d'un chanfreinage (18).

8. Tour d'éolienne selon l'une quelconque des revendications précédentes, dans laquelle le pied basculable (3) est agencé pour pouvoir être verrouillé dans une position basculée.

9. Tour d'éolienne selon l'une quelconque des revendications précédentes, dans laquelle les colonnes modularisées en bois simple et double (4, 5) peuvent être jointes mutuellement par des boulons et/ou des adhésifs.

10. Procédé d'érection d'une tour d'éolienne selon l'une quelconque des revendications 1 - 9, comprenant les étapes de :
- prévoir une fondation (6) pour chaque pied (2, 3) ;
- agencer les trois pieds (2, 3) sur le sol ;
- relier les deux pieds non basculables (2) à leurs fondations (6) respectives,
- ériger la tour (1) en élevant les extrémités libres des deux pieds non basculables (2) et en fixant la section supérieure (3a) du pied basculable (3) à la section supérieure (2a) des deux pieds non basculables (2) élevés intégrés dans un module en forme de A (10) en poussant le pied basculable (3) en direction de sa fondation (6) et en le reliant à sa fondation (6).

11. Procédé d'érection de la tour d'éolienne selon la revendication 10, comprenant l'étape de montage d'une éolienne (20) sur la colonne supérieure (11) de la tour (1) intégrée dans le module en forme de A (10) avant qu'elle ne soit totalement érigée, lorsque les trois pieds (2, 3) sont au moins à mi-longueur au-dessus du sol, puis, l'éolienne mentionnée est élevée conjointement avec la tour d'éolienne (1), étant érigée dans un état totalement érigé.

12. Kit d'assemblage modularisé comprenant une tour d'éolienne (1) selon l'une quelconque des revendications 1 - 9 et une éolienne (20).
